# EUROPÄISCHE PATENTANMELDUNG

(11) **EP 2 837 447 A1**
(43) Veröffentlichungstag der Anmeldung: **18.02.2015**
(21) Anmeldenummer: 14180692.7
(22) Anmeldetag: 12.08.2014
(51) Int. Cl.: B23B 5/16, B23C 3/00

(54) **Schälgerät zur schälenden Bearbeitung des Außen- oder Innenumfangs rohrförmiger Gegenstände**

(30) Priorität: 16.08.2013 DE 102013108896
(71) Anmelder: Friatec Aktiengesellschaft, 68229 Mannheim (DE)
(72) Erfinder: Sichler, Bernhard, 69502 Hemsbach (DE); Fastanz, Mathias, 68199 Mannheim (DE); Schmitt, Harald, 68309 Mannheim (DE); Reingruber, Horst, 68219 Mannheim (DE)
(74) Vertreter: Angerhausen, Christoph

(57) **Zusammenfassung**

Schälgerät zur schälenden Bearbeitung des Außen- oder Innenumfangs rohrförmiger Gegenstände, mit einem Fräserrotor (1), der in einer Radialrichtung (R) linear verstellbar und um zwei sich senkrecht zueinander sowie senkrecht zu der Radialrichtung (R) erstreckenden Rotationsachsen (X, Y) verschwenkbar ist.

## Beschreibung

Die Erfindung betrifft ein Schälgerät zur schälenden Bearbeitung des Außen- oder Innenumfangs rohrförmiger Gegenstände.

Die EP 2 439 052 A1 beschreibt ein Schälgerät zum mindestens teilweisen Abtragung der Außenumfangsoberfläche von rotationssymmetrischen Gegenständen, insbesondere zylindrischen Kunststoffrohren. Das Schälgerät umfasst einen Schälkopf mit einer eine Mittellängsachse aufweisenden Antriebswelle, wobei der Schälkopf eine drehfest auf der Antriebswelle und koaxial zu dieser angeordnete zylindrische Messerwalze aufweist. Der Schälkopf umfasst weiterhin wenigstens eine in der Messerwalze angeordnete Schälklinge, die eine aus der Messerwalzenoberfläche herausragende und den maximalen Außendurchmesser des Schälkopfes bildende Schneidkante aufweist. Es sind zwei zylindrische und Mittellängsachsen aufweisende Führungselemente vorgesehen, die an den Stirnseiten der Messerwalze koaxial zu dieser angeordnet sind.

Für ein zuverlässiges Schälergebnis ist es wesentlich, dass während der Bearbeitung des Außen- oder Innenumfangs des rohrförmigen Gegenstands der Kraftschluss zwischen dem Fräserrotor und dem zu bearbeitenden Gegenstand nicht unterbrochen wird. Des weiteren ist es wesentlich, dass während des Schälvorgangs ein konstanter Anpressdruck des Fräserrotors aufrecht erhalten wird.

Diese Aufgabe wird erfindungsgemäß mit einem der Schälgeräte nach Anspruch 1 oder 9 gelöst. Die abhängigen Ansprüche betreffen jeweils vorteilhafte Ausführungsformen der Erfindung.

Das erfindungsgemäße Schälgerät zeichnet sich dadurch aus, dass es einen Fräserrotor aufweist, der in einer Radialrichtung linear verstellbar und um zwei sich senkrecht zueinander sowie senkrecht zu der Radialrichtung erstreckende Rotationsachsen verschwenkbar ist.

Die Radialrichtung soll sich bei erfindungsgemäßen Schälgeräten gerade in Radialrichtung der zu bearbeitenden, rohrförmigen Gegenstände erstrecken. Dadurch sind dann auch die weiteren Rotationsachsen eindeutig bestimmt. Die Bewegung des Fräsers kann sowohl um eine Drehachse vom Zentrum durch konzentrisch versetzte Kreisbahnen bei kreisrunden Schälflächen erfolgen, oder radial zur Rohroberfläche mit überdeckten Fräsbahnen für rechteckige Schälflächen. Hierbei kann die Führung des Fräskopfes mechanisch zwangs- als auch handgeführt sein.

Der erfindungsgemäße Fräserrotor kann beispielsweise als Taumelfräser ausgebildet sein, welcher über eine in Radialrichtung verstellbare Linearführung dem zu schälenden Gegenstand angenähert wird. Ist der Fräserrotor auf diese Weise mit dem zu schälenden Gegenstand in Verbindung gebracht worden, kann über eine Vorspannung der Linearverstellung, beispielsweise mit Hilfe einer Spiralfeder, ein gewünschter Anpressdruck des Fräserrotors eingestellt und zuverlässig aufrecht erhalten werden. Die taumelnde Aufhängung des Fräserrotors stellt sicher, dass eine Aufstandsfläche des Fräserrotors, aus welcher Schneidplatten mit ihren Schneidkanten herausragen, auch dann auf der Oberfläche des zu bearbeitenden Gegenstands aufliegen, wenn diese Unebenheiten aufweist.

Bei einer Ausführungsform der Erfindung weist der Fräserrotor ein Hülsenelement auf, das eine umlaufende, vorzugsweise ringförmige Aufstandsfläche bildet, wobei im Innern des Hülsenelements mindestens eine Schneidplatte aufgenommen ist. Das Hülsenelement kann hierbei auch als rotatorische Schwungmasse dienen, die einen relativen Gleichlauf des Fräskopfes mit den im Inneren angestellten Fräsmessern ermöglicht. Hierbei werden die Vibrationen reduziert und ein homogener Spanabtrag ohne Rattermarken ermöglicht. Die Schneidkanten können sowohl separate, an dem Hülsenelement befestigte, beispielsweise auswechselbar verschraubte Bauteile, oder einstückig mit dem Hülsenelement ausgebildete Bauteile sein.

Vorzugsweise ragt dabei die Schneidplatte durch die Ebene, in welcher die Aufstandsfläche angeordnet ist, aus dem Innern des Hülsenelements heraus, so dass eine Schneidkante der Schneidplatte außerhalb des Hülsenelements angeordnet ist. Dabei ist die Spanstärke gerade durch das Maß bestimmt, um das die Schneidkante der Schneidplatte über die Aufstandsflache aus dem Innern des Hülsenelements heraus ragt.

Zur Realisierung der Beweglichkeit des Fräserrotors um die beiden Rotationsachsen ist bei einer Ausführungsform der Erfindung im Innern des Hülsenelements ein Fräsergelenk aufgenommen, das eine erste Gelenkachse aufweist, über die das Fräsergelenk zwischen gegenüber liegenden Innenseiten des Hülsenelements verschwenkbar um die erste Gelenkachse mit dem Hülsenelement verbunden ist.

Das Fräsergelenk kann eine zweite Gelenkachse aufweisen, die sich senkrecht zu der ersten Gelenkachse erstreckt, wobei das Fräsergelenk über eine Gelenkgabel eines Fräserschafts verschwenkbar um die zweite Gelenkachse mit dem Fräserschaft verbunden ist.

Zu Erzielung der linearen Verstellbarkeit des Fräserrotors kann ein der Gelenkgabel gegenüber liegendes Ende des Fräserschafts in einer Teleskophülse aufgenommen sein, so dass der Fräserschaft zur linearen Verstellung des Fräserrotors in Radialrichtung entlang seiner Längsachse linear verstellbar ist.

Das erimdungsgemäße Schälgerät kann beispielsweise über seinen Fräserschaft bzw. die Teleskophülse in ein Spannfutter eines elektrischen Drehantriebs, beispielsweise einer Handbohrmaschine oder eines Akkuschraubers, eingespannt sein.

Vorzugsweise weist der erfindungsgemäße Fräserrotor gekippt angelenkte Schneidplatten auf. Dazu kann bei einer Ausführungsform der Erfindung vorgesehen sein, dass sich im Innern des Hülsenelements zwischen gegenüberliegenden Seiten seines Innenumfangs ein Montagesteg für mindestens eine Schneidplatte erstreckt, wobei der Montagesteg mindestens eine Montageebene für eine Schneidplatte aufweist, die sich unter einem spitzen Winkel zu der Aufstandsfläche erstreckt.

Bei einer Ausführungsform weist der Montagesteg aneinander grenzend eine erste und eine zweite Montageebene für eine erste und eine zweite Schneidplatte auf, wobei die Montageebenen einen entgegengesetzten Steigungswinkel in Bezug auf die Aufstandsfläche aufweisen. Die Positionierung der Schneidplatten in der Montageebene des Fräskopfes erfolgt symmetrisch und diametral versetzt in Bezug zum Inneradius des Taumelkopfes. Hierdurch wird ein vordefinierter Spanabtrag sichergestellt.

Gemäß einem anderen Aspekt der Erfindung wird ein Schälgerät vorgeschlagen, bei dem ein Fräserrotor als Walzenfräser mit mindestens einer auf dessen Mantelfläche spiralförmig um eine Rotationsachse des Walzenfräsers angeordneten Schneidkante ausgebildet ist, wobei der Walzenfräser mit seiner Rotationsachse parallel zu einer Oberfläche eines zu bearbeitenden Gegenstands geführt ist, und wobei der Walzenfräser über einen Ausleger an einer Hebe- und Verschwenkeinheit angelenkt ist, die darauf ausgelegt ist, den Walzenfräser zum einen in einer Radialrichtung des zu bearbeitenden Gegenstandes wahlweise anzuheben oder abzusenken, und zum anderen in einer Ebene senkrecht zu der Radialrichtung zu verschwenken. In einer weiteren Ausführungsform kann die Führung dieses Walzenfräsers auch mechanisch handgeführt erfolgen.

Bei dem zuvor beschriebenen Schälgerät kann weiterhin die Hebe- und Verschwenkeinheit darauf ausgelegt sein, den Walzenfräser in einer Ebene parallel zu der Radialrichtung zu verkippen.

Gemäß einer besonderen Ausführungsform der Erfindung ist das Schälgerät ein portables, handgeführtes Gerät, das einen Träger aufweist, von dem der Fräserrotor gehalten ist, wobei der Träger eine Stütz- und Auflagefläche aufweist, über die das Schälgerät auf einen zu bearbeitenden rohrförmigen Gegenstand aufsetzbar ist, und wobei sich der Fräserrotor von einer der Stütz- und Auflagefläche gegenüber liegenden Seite um eine gewünschte Frästiefe durch die Stütz- und Auflagefläche hindurch erstreckt.

Dabei kann es vorgesehen sein, dass die Stütz- und Auflagefläche reibungsmindernde Abstandshalter aufweist, über die das Schälgerät auf dem zu bearbeitenden rohrförmigen Gegenstand aufgesetzt ist, so dass der Träger und der Fräserrotor mit geringem Kraftaufwand über eine Oberfläche des zu bearbeitenden rohrförmigen Gegenstandes geführt werden können. Dazu können die Abstandshalter ein reibungsminderndes Material aufweisen.

Zur Variation der Frästiefe kann bei einer Ausführungsform der Erfindung vorgesehen sein, dass der Träger eine austauschbare Wechselplatte aufweist, wobei die Wechselplatte die Stütz- und Auflagefläche und gegebenenfalls die Abstandshalter aufweist, so dass über einen Austausch der Wechselplatte eine Frästiefe des Fräserrotors angepasst werden kann.

Das zuvor beschriebene, portable und handgeführte Gerät soll bei einer Ausführungsform der Erfindung mit gängigen Antrieben, insbesondere elektromotorischen Antrieben, verwendet werden können. Dazu ist bei einer Ausführungsform der Erfindung vorgesehen, dass der Träger eine Geräteaufnahme für die wahlweise Montage und Demontage eines Antriebs für den Fräserrotor aufweist. Bevorzugt weist der Fräserrotor einen Fräserschaft auf, der darauf ausgelegt ist, in ein Spannfutter eines über die Geräteaufnahme montierten Antriebs eingespannt zu werden.

Weitere Einzelheiten der Erfindung werden anhand der nachstehenden Figuren erläutert. Dabei zeigt:
- Figur 1: eine Seitenansicht einer Ausführungsform des erfindungsgemäßen Schälgeräts, bei dem die Teleskophülse im Querschnitt gezeigt ist;
- Figur 2: eine perspektivische Ansicht des Fräserrotors gemäß Figur 1;
- Figuren 3a und 3b: einen Längsquerschnitt sowie eine Seitenansicht des Fräsergelenks gemäß den Figuren 1 und 2; und
- Figur 4: eine Draufsicht auf den Fräserschaft der Ausführungsform gemäß Figur 1.

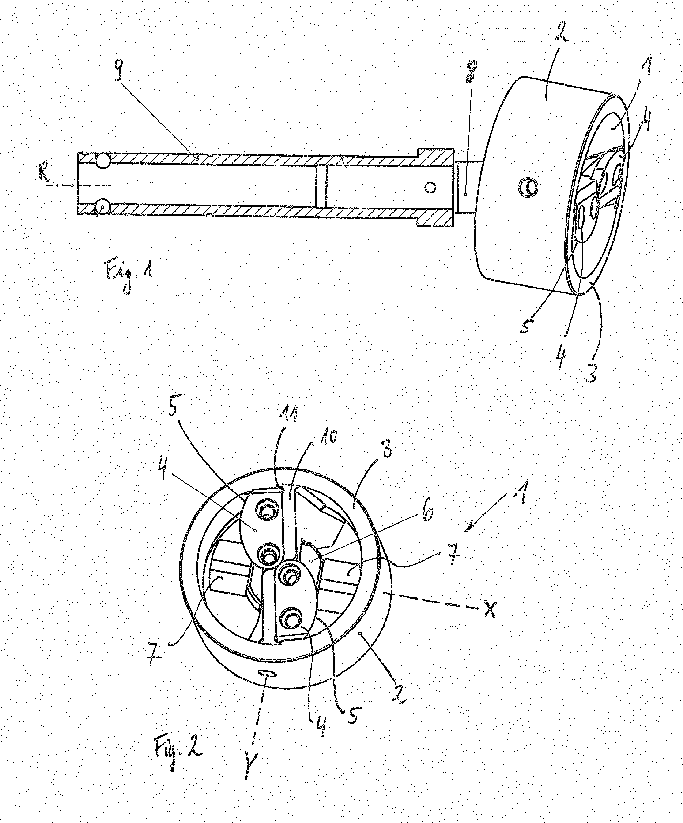

Die Figur 1 zeigt eine Ausführungsform des erfindungsgemäßen Schälgeräts zur schälenden Bearbeitung des Außen- oder Innenumfangs rohrförmiger Gegenstände. Das Schälgerät weist einen Fräserrotor 1 auf, der um zwei Achsen schwenkbar an einem Fräserschaft 8 angelenkt ist. Der Fräserschaft 8 ist wiederum in eine Teleskophülse 9 eingesetzt, so dass der Fräserrotor 1 entlang der Radialrichtung R linear verstellbar ist. Der Fräserrotor 1 weist ein rohrförmiges Hülsenelement 2 auf, wobei in dem von dem Innenumfangs des Hülsenelements 2 abgegrenzten Innenraum zwei Schneidplatten 4 aufgenommen sind. Eine von dem Fräserschaft 8 abgewandt Stirnseite des Hülsenelements 2 bildet gerade eine Aufstandsfläche 3, über welche der Fräserrotor 1 auf dem zu bearbeitenden Gegenstand aufgesetzt werden kann. Dabei sind die Schneidplatten 4 gerade derart angeordnet, dass sie durch die Ebene, in welcher die Aufstandsfläche 3 angeordnet ist, aus dem Inneren des Hülsenelements 2 herausragen, so dass eine Schneidkante 4 der Schneidplatte 5 außerhalb des Hülsenelements 2 angeordnet ist.

In Figur 2 ist der Fräserrotor 1 im Detail gezeigt. Die Figur 2 zeigt eine perspektivische Draufsicht auf die Schneidseite des Fräserrotors 1. Zwischen gegenüberliegenden Seiten des Innenumfangs des Hülsenelements 2 erstreckt sich ein Montagesteg 10, auf dem zwei Schneidplatten 4 mit entgegengesetzter Ausrichtung der Schneidkanten 5 angeordnet sind. Damit die Schneidplatten 4, die mit Bezug auf Figur 1 beschriebene Ausrichtung erhalten, weist der Montagesteg für jede Schneidplatte 4 eine Montageebene 11 auf, die sich unter einem spitzen Winkel zu der Aufstandsfläche 3 des Hülsenelements 2 erstreckt. In der Draufsicht unterhalb der Schneidplatten 4 ist das Fräsergelenk 6 verdrehbar um die Achse Y mit dem Hülsenelement 2 verbunden. Senkrecht zu der Rotationsachse Y erstreckt sich die Rotationsachse X, wobei gerade die Gelenkgabel 7 des Fräserschaftes 8 verschwenkbar um die Rotationsachse X mit dem Fräsergelenk 6 verbunden ist.

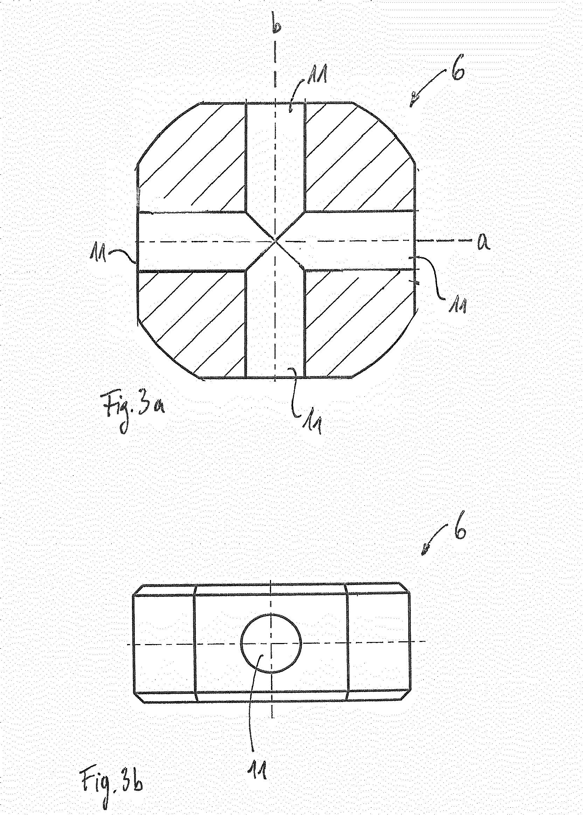

Das Fräsergelenk 6 ist im Detail in den Figuren 3a und 3b gezeigt. Es ist im Wesentlichen als ein quaderförmiges Bauteil mit gerundeten Kanten ausgebildet, wobei die Gelenkachsen a, b für Rotationen des Fräserrotors 1 um die Rotationsachsen X und Y gerade mit Hilfe von Bohrungen 11 ausgebildet sind.

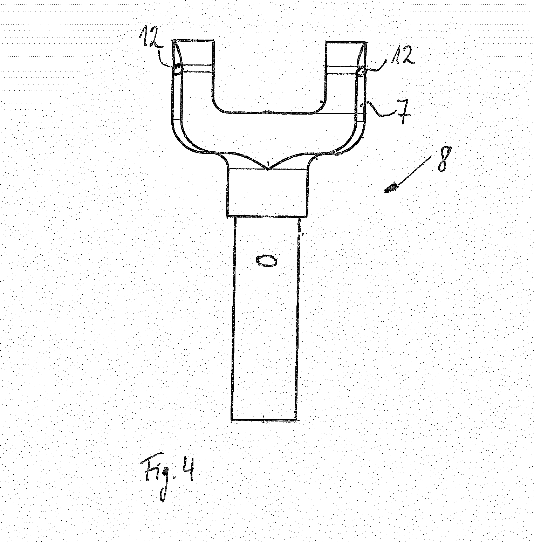

In Figur 4 ist der Fräserschaft 8 gemäß einer Ausführungsform gezeigt. An einem Ende weist dieser die Gelenkgabel 7 auf, zwischen deren Zinnen das Fräsergelenk 6 (siehe Figuren 3a und 3b) aufgenommen werden kann. Es sind Bohrungen 12 vorgesehen, welche bei eingesetztem Fräsergelenk 6 mit den Bohrungen 11 einer der Gelenkachsen a, b fluchten sollen, so dass mit Hilfe eines oder zweier Bolzen, welche in die fluchtenden Öffnungen 11, 12 eingesetzt sind, das Fräsergelenk 6 und damit der Fräserrotor 1 um die Rotationsachse X verschwenkbar an dem Fräserschaft 8 angelenkt werden kann. Über das der Gelenkgabel 7 abgewandte Ende des Fräserschaftes 8 ist dieser zur Realisierung der Linearverstellbarkeit in Radialrichtung in eine Teleskophülse 9 (siehe Figur 1) eingesetzt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Fräserrotor
- 2: Hülsenelement
- 3: Aufstandsfläche
- 4: Schneidplatte
- 5: Schneidkante
- 6: Fräsergelenk
- 7: Gelenkgabel
- 8: Fräserschaft
- 9: Teleskophülse
- 10: Montagesteg
- 11: Montageebene
- a: erste Gelenkachse
- b: zweite Gelenkachse
- X, Y: Rotationsachsen

## Patentansprüche

1. Schälgerät zur schälenden Bearbeitung des Außen- oder Innenumfangs rohrförmiger Gegenstände, mit einem Fräserrotor (1), der in einer Radialrichtung (R) linear verstellbar und um zwei sich senkrecht zueinander sowie senkrecht zu der Radialrichtung (R) erstreckenden Rotationsachsen (X, Y) verschwenkbar ist.

2. Schälgerät nach Anspruch 1, bei dem der Fräserrotor (1) ein Hülsenelement (2) aufweist, das eine umlaufende, vorzugsweise ringförmige Aufstandsfläche (3) bildet, wobei im Innern des Hülsenelements (2) mindestens eine Schneidplatte (4) aufgenommen ist.

3. Schälgerät nach Anspruch 2, bei dem die Schneidplatte (4) durch die Ebene, in welcher die Aufstandsfläche (3) angeordnet ist, aus dem Innern des Hülsenelements (2) herausragt, so dass eine Schneidkante (5) der Schneidplatte (4) außerhalb des Hülsenelements (2) angeordnet ist.

4. Schälgerät nach Anspruch 2 oder 3, bei dem die mindestens Schneidplatte (4) einstückig mit dem Hülsenelement (2), oder bei dem an dem Hülsenelement (2) mindestens eine Schneidkante einstückig mit dem Hülsenelement (2) ausgebildet ist..

5. Schälgerät nach einem der Ansprüche 2 bis 4, bei dem im Innern des Hülsenelements (2) ein Fräsergelenk (6) aufgenommen ist, das eine erste Gelenkachse (a) aufweist, über die das Fräsergelenk (6) zwischen gegenüber liegenden Innenseiten des Hülsenelements (2) verschwenkbar um die erste Gelenkachse (a) mit dem Hülsenelement (2) verbunden ist.

6. Schälgerät nach Anspruch 5, bei dem das Fräsergelenk (6) eine zweite Gelenkachse (b) aufweist, die sich senkrecht zu der ersten Gelenkachse (a) erstreckt, wobei das Fräsergelenk (6) über eine Gelenkgabel (7) eines Fräserschafts (8) verschwenkbar um die zweite Gelenkachse (b) mit dem Fräserschaft (8) verbunden ist.

7. Schälgerät nach Anspruch 6, bei dem ein der Gelenkgabel (7) gegenüber liegendes Ende des Fräserschafts (8) in einer Teleskophülse (9) aufgenommen ist, so dass der Fräserschaft (8) zur linearen Verstellung des Fräserrotors (1) in Radialrichtung entlang seiner Längsachse linear verstellbar ist.

8. Schälgerät nach Anspruch 6 oder 7, das über seinen Fräserschaft bzw. eine Teleskophülse in ein Spannfutter eines elektrischen Drehantriebs, beispielsweise einer Handbohrmaschine oder eines Akkuschraubers, eingespannt ist.

9. Schälgerät nach Anspruch 2, bei dem sich im Innern des Hülsenelements (2) zwischen gegenüberliegenden Seiten seines Innenumfangs ein Montagesteg (10) für mindestens eine Schneidplatte (4) erstreckt, wobei der Montagesteg (10) mindestens eine Montageebene (11) für eine Schneidplatte (4) aufweist, die sich unter einem spitzen Winkel zu der Aufstandsfläche (3) erstreckt.

10. Schälgerät nach Anspruch 9, bei dem der Montagesteg (10) aneinander grenzend eine erste und eine zweite Montageebene (11) für eine erste und eine zweite Schneidplatte (4) aufweist, wobei die Montageebenen (11) einen entgegengesetzten Steigungswinkel in Bezug auf die Aufstandsfläche (3) aufweisen.

11. Schälgerät nach einem der vorangegangenen Ansprüche, das weiterhin mindestens eine radiale Schwenkachse aufweist, die zwangs- und/oder handgeführt ist.

12. Schälgerät nach einem der vorangegangenen Ansprüche, bei dem die mindestens eine Schneidplatte (4) derart in der Montageebene (11) positioniert sind, dass ein vordefinierter Spannabtrag erfolgt.

13. Schälgerät zur schälenden Bearbeitung des Außen- oder Innenumfangs rohrförmiger Gegenstände, bei dem ein Fräserrotor als Walzenfräser mit mindestens einer auf dessen Mantelfläche spiralförmig um eine Rotationsachse des Walzenfräsers angeordneten Schneidkante ausgebildet ist, wobei der Walzenfräser mit seiner Rotationsachse parallel zu einer Oberfläche eines zu bearbeitenden Gegenstands geführt ist, und wobei der Walzenfräser über einen Ausleger an einer Hebe- und Verschwenkeinheit angelenkt ist, die darauf ausgelegt ist, den Walzenfräser zum einen in einer Radialrichtung des zu bearbeitenden Gegenstandes wahlweise anzuheben oder abzusenken, und zum anderen in einer Ebene senkrecht zu der Radialrichtung zu verschwenken.

14. Schälgerät nach Anspruch 13, bei dem die Hebe- und Verschwenkeinheit weiterhin darauf ausgelegt ist, den Walzenfräser in einer Ebene parallel zu der Radialrichtung zu verkippen.

15. Schälgerät nach einem der vorangegangenen Ansprüche, das ein portables, handgeführtes Gerät ist, das einen Träger aufweist, von dem der Fräserrotor (1) gehalten ist, wobei der Träger eine Stütz- und Auflagefläche aufweist, über die das Schälgerät auf einem zu bearbeitenden rohrförmigen Gegenstand aufsetzbar ist, und wobei sich der Fräserrotor (1) von einer der Stütz- und Auflagefläche gegenüber liegenden Seite um eine gewünschte Frästiefe durch die Stütz- und Auflagefläche hindurch erstreckt.

16. Schälgerät nach Anspruch 15, bei dem die Stütz- und Auflagefläche reibungsmindernde Abstandshalter aufweist, über die das Schälgerät auf dem zu bearbeitenden rohrförmigen Gegenstand aufgesetzt ist, so dass der Träger und der Fräserrotor (1) mit geringem Kraftaufwand über eine Oberfläche des zu bearbeitenden rohrförmigen Gegenstands geführt werden können.

17. Schälgerät nach Anspruch 15 oder 16, bei dem der Träger eine austauschbare Wechselplatte aufweist, wobei die Wechselplatte die Stütz- und Auflagefläche und gegebenenfalls die Abstandshalter aufweist, so dass über einen Austausch der Wechselplatte eine Frästiefe der Fräserrotors (1) angepasst werden kann.

18. Schälgerät nach einem der Ansprüche 15 bis 17, bei dem der Träger eine Geräteaufnahme für die wahlweise Montage und Demontage eines Antriebs für den Fräserrotor (1) aufweist.

19. Schälgerät nach Anspruch 18, bei dem der Fräserrotor einen Fräserschaft aufweist, der darauf ausgelegt ist, in ein Spannfutter eines über die Geräteaufnahme montierten Antriebs eingespannt zu werden.
